Europäisches Patentamt

(19) European Patent Office

Office européen des brevets

(11) EP 0 782 069 A1

(12) EUROPEAN PATENT APPLICATION

(43) Date of publication:
02.07.1997 Bulletin 1997/27

(51) Int. Cl.$^6$: G06F 7/58, H04L 9/26

(21) Application number: 96120661.2

(22) Date of filing: 20.12.1996

(84) Designated Contracting States:
DE FR GB NL

(30) Priority: 25.12.1995 JP 336920/95

(71) Applicant: NEC CORPORATION
Tokyo (JP)

(72) Inventor: Shimada, Michio
Minato-ku, Tokyo (JP)

(74) Representative: VOSSIUS & PARTNER
Siebertstrasse 4
81675 München (DE)

(54) Pseudorandom number generator

(57) A pseudorandom number generator which has a relatively small number of pseudorandom number generating circuits such as linear feedback shift registers and generates a sequence of pseudorandom numbers with a high nonlinearity. The pseudorandom number generator is suitable for use in producing stream ciphers. The pseudorandom number generator is provided with a combining function circuit for combining outputs from the pseudorandom number generating circuits according to a nonlinear function, a shift register which operates in synchronism with a clock signal and storing an output from the combining function circuit at one end, and a nonlinear function circuit for nonlinearly combining predetermined bits of the stored bits of the shift register. A sequence of pseudorandom numbers can be obtained from the output of the nonlinear function circuit.

FIG. 7

EP 0 782 069 A1

## Description

The present invention relates to a pseudorandom number generator for generating pseudorandom numbers.

Communication systems and computer systems employ stream cipher apparatus or the like for converting information into enciphered information by adding pseudorandom numbers to the information through an exclusive-OR operation and recovering original information by adding pseudorandom numbers to enciphered information through an exclusive-OR operation in order to prevent an unauthorized person from gaining an unlawful access to the information.

Pseudorandom numbers used to encrypt information to prevent an unauthorized access to the information are required to be highly nonlinear. According to one widely used conventional process of generating pseudorandom numbers that are used for encryption, output signals from a plurality of pseudorandom number generating circuits are nonlinearly combined by a nonlinear function called a combining function to generate pseudorandom numbers that are more highly nonlinear. The pseudorandom number generating circuit is a basic circuit, such as a linear feedback shift register or the like, for producing pseudorandom numbers. A pseudorandom number generator includes one or more such pseudorandom number generating circuits and generates pseudorandom numbers of higher nonlinearity.

A nonlinear combination is a combination which is not a linear combination. The linear combination of a plurality of bits $x_1$, ..., $x_n$, ... is to give a bit $y = x_1 + x_2 + ... + x_n$ or $y = x_1 + x_2 + ... + x_n + 1$, for example, using only exclusive-OR operations "+". A nonlinear combination of a plurality of bits $x_1$, ..., $x_n$, ... is to give a bit $y = x_1{}^*x_2 + x_2{}^*x_3 + ... + x_n{}^*x_1$, for example, using both AND operations "*" and exclusive-OR operations "+" (may include a NOT operation), and will not be reduced to a linear combination no matter how an equation which gives the bit y may be modified. The nonlinearity of a nonlinear combination is equivalent to the degree of an equation which gives the bit y. The greater the degree of an equation, the higher the nonlinearity. As the number of inputs to a nonlinear function, i.e., the number of pseudorandom number generating circuits to be combined, is greater, it is possible to achieve a nonlinear combination of higher nonlinearity.

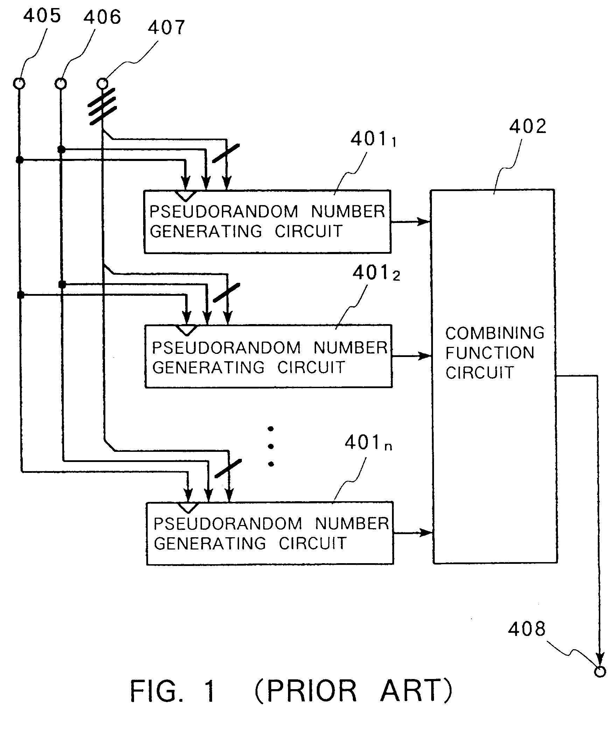

FIG. 1 is a functional block diagram of an example of a conventional pseudorandom number generator. As shown in FIG. 1, the conventional pseudorandom number generator comprises n pseudorandom number generating circuits $401_1$ to $401_n$ where n is an integer of 2 or higher, a combining function circuit 402 for nonlinearly combining outputs from the n pseudorandom number generating circuits $401_1$ to $401_n$ to produce a pseudorandom number from an output terminal 408, an input terminal 405 for being supplied with a control pulse (a clock pulse), an input terminal 406 for mode control, and an input terminal 407 for parallelly inputting a bit sequence called an initial state. Each of the pseudorandom number generating circuits $401_1$ to $401_n$ is connected to the input terminals 405, 406 and 407. If a control pulse is inputted to the input terminal 405 while a signal "0" is being supplied to the input terminal 406, then each of the pseudorandom number generating circuits $401_1$ to $401_n$ reads the initial state supplied from the input terminal 407 and holds it as an internal state. Each time a control pulse is inputted to the input terminal 405 while a signal "1" is being supplied to the input terminal 406, then each of the pseudorandom number generating circuits $401_1$ to $401_n$ outputs a pseudorandom number. Generally, the pseudorandom number generating circuits $401_1$ to $401_n$ are supplied with respective different initial states.

A pseudorandom number is generated by the pseudorandom number generator shown in FIG. 1 as follows: First, an initial state is supplied to the input terminal 407, then a signal "0" is supplied to the input terminal 406, and a control pulse is inputted to the input terminal 405. Then, a signal "1" is supplied to the input terminal 406. Subsequently, each time a control pulse is inputted to the input terminal 405, the combining function circuit 402 nonlinearly combines the outputs from the pseudorandom number generating circuits $401_1$ to $401_n$ to generate a pseudorandom number, which is outputted from the output terminal 408.

However, the conventional pseudorandom number generator is problematic in that the initial states set in the respective pseudorandom number generating circuits $401_1$ to $401_n$ may be estimated by a deciphering process known as a correlation attack, allowing encrypted information to be unlawfully deciphered. Specifically, if a conditional probability distribution of an output from the combining function circuit 402 which is conditioned by an output from a certain pseudorandom number generating circuit $401_j$ ($1 \leq j \leq n$) is not uniform, then a pseudorandom number sequence generating circuit equivalent to the pseudorandom number generating circuit $401_j$ may be presumed, and an initial state of the pseudorandom number sequence generating circuit may be determined in order to maximize the correlation between an output sequence of the pseudorandom number sequence generating circuit and an output sequence of the combining function circuit 402, for thereby recognizing an initial state given to the pseudorandom number generating circuit $401_j$. Because of the above properties, the conventional pseudorandom number generator cannot be used as a pseudorandom number generator for producing stream ciphers. The correlation attack is described in detail in "Analysis and Design of Stream Ciphers" written by R. A. Rueppel, published by Springer-Verlag, 1996, pages 92 - 141.

In an attempt to prevent encrypted information from being decrypted by a correlation attack, the present inventor has proposed a pseudorandom number generator which does not use a bit stream outputted by a combining function circuit, but a bit stream produced when an output from the combining function circuit is convoluted, as a pseudorandom number, as disclosed in Japanese unexamined patent publication (Kokai) No. Hei 7-104976 (JP, A, 7-104976). Using a bit stream produced when an output from the combining function circuit is convoluted as a pseudorandom number substantially uniformizes a conditional probability distribution of pseudorandom numbers which is conditioned by an output from a certain pseudorandom number generating circuit, making it difficult to decipher encrypted information with a correlation attack.

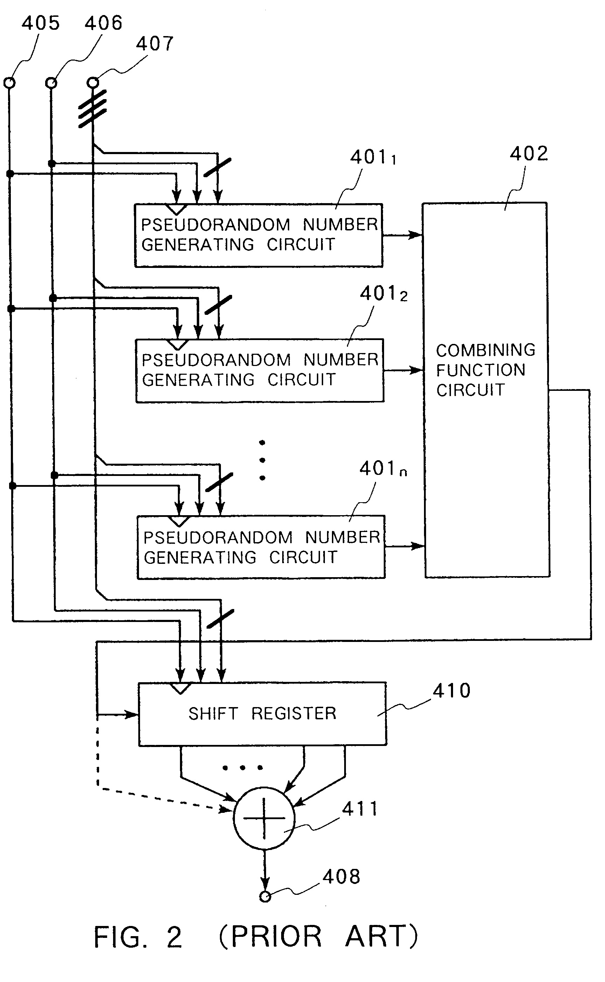

FIG. 2 shows in functional block form a conventional pseudorandom number generator which is designed to protect itself from a correlation attack. The pseudorandom number generator shown in FIG. 2 differs from the pseudorandom number generator shown in FIG. 1 in that a shift register 410 and an exclusive-OR gate 411 are inserted between the combining function circuit 402 and the output terminal 408. The shift register 410 is also connected to the input terminals 405, 406 and 407. If a control pulse is inputted to the input terminal 405 while a signal "0" is being supplied to the input terminal 406, then the shift register 410 reads a bit sequence, called an initial state, supplied from the input terminal 407 and holds it as an internal state. Each time a control pulse is inputted to the input terminal 405 while a signal "1" is being supplied to the input terminal 406, then the shift register 410 shifts the internal state one bit to the right and holds an output from the combining function circuit 402 at an left end bit therein. The exclusive-OR gate 411 calculates a linear combination of predetermined bits in the internal state of the shift register 410, and the calculated linear combination is outputted as a pseudorandom number from the output terminal 408. As indicated by the dotted line in FIG. 2, the output from the combining function circuit 402 may also be applied to the exclusive-OR gate 411.

For generating a pseudorandom number from the pseudorandom number generator shown in FIG. 2, an initial state is supplied to the input terminal 407, then a signal "0" is supplied to the input terminal 406, and a control pulse is inputted to the input terminal 405. Then, a signal "1" is supplied to the input terminal 406. Subsequently, each time a control pulse is inputted to the input terminal 405, a pseudorandom number is outputted from the output terminal 408.

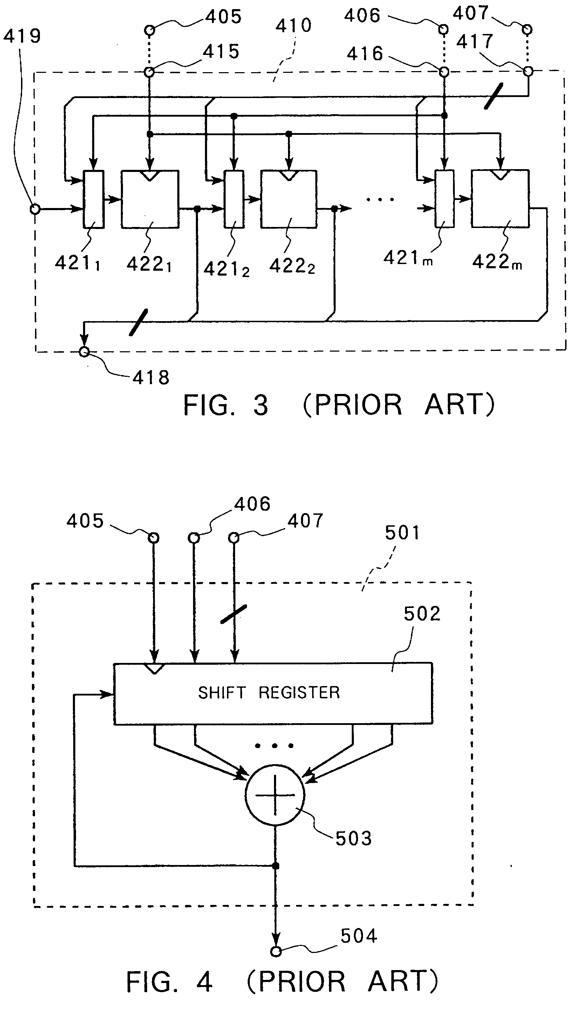

FIG. 3 shows an internal structure of the shift register 410. The shift register 410 has m stages, and includes a clock input terminal 415, a mode switching signal input terminal 416, an internal state input terminal 417 for establishing an internal state in the shift register 410, an internal state output terminal 418 for outputting the internal state of the shift register 410, a shift input terminal 419, m selectors $421_1$ to $421_m$ of 2-input for making selections in response to a signal inputted to the mode switching signal input terminal 416, and m D-type flip-flops $422_1$ to $422_m$. The D-type flip-flops $422_1$ to $422_m$ are clocked by a clock signal inputted to the clock input terminal 415, for receiving respective outputs from the selectors $421_1$ to $421_m$. An output

sequence from the D-type flip-flops $422_1$ to $422_m$ is referred to as an internal state of the shift register 410. Under the condition shown in FIG. 2, the clock input terminal 415 is connected to the input terminal 405, the mode switching signal input terminal 416 to the input terminal 406, the internal state input terminal 417 to the input terminal 407, and the shift input terminal 419 to the output terminal of the combining function circuit 402.

The selector $421_1$ on the left end in the shift register 410 is supplied with an output from the combining function circuit 402 (see FIG. 2) through the shift input terminal 419 and one bit of the internal state inputted from the internal state input terminal 417. Each of the other selectors $421_j$ (j = 2, ..., m) is supplied with an output from a D-type flip-flop $421_{j-1}$ and an inherent bit in the internal state inputted from the internal state input terminal 417. When a signal "0" is supplied from the mode switching signal input terminal 416, the selectors $421_1$ to $421_m$ select and output respective bits supplied from the internal state input terminal 417. When a signal "1" is supplied from the mode switching signal input terminal 416, the selectors $421_1$ to $421_m$ select and output a signal from the shift input terminal 419 and signals from the preceding D-type flip-flops $422_1$ to $422_{m-1}$. Each time a control pulse is supplied from the clock input terminal 415, the D-type flip-flops $422_1$ to $422_m$ hold respective outputs from the selectors $421_1$ to $421_m$, and output the held values. The outputs from the respective D-type flip-flops $422_1$ to $422_m$ are outputted as parallel m bits from the internal state output terminal 418, and some of the outputted bits are inputted to the exclusive-OR gate 411 (see FIG. 2).

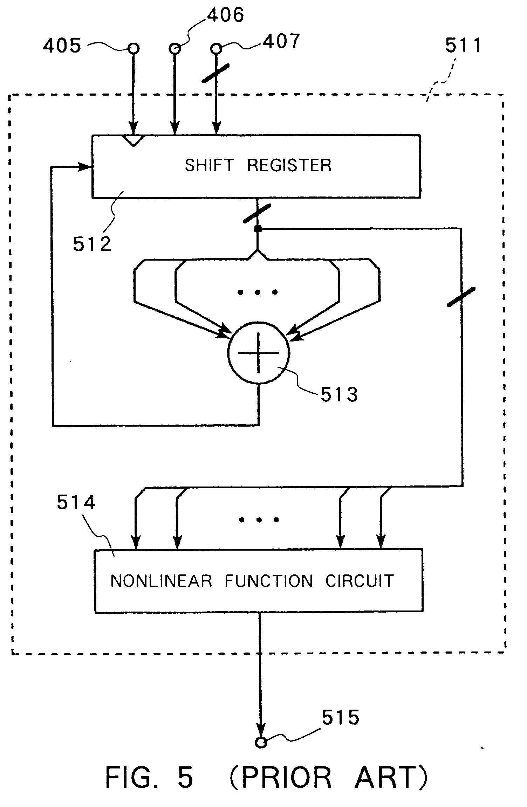

A structure of each of the pseudorandom number generating circuits $401_1$ to $401_n$ will be described below. Each of the pseudorandom number generating circuits $401_1$ to $401_n$ may be a pseudorandom number generating circuit 501 which comprises only a linear feedback shift register as shown in FIG. 4 or a pseudorandom number generating circuit 511 which comprises a combination of a nonlinear function circuit and a linear feedback shift register as shown in FIG. 5. Alternatively, each of the pseudorandom number generating circuits $401_1$ to $401_n$ may be of another different circuit arrangement.

The pseudorandom number generating circuit 501 which comprises only a linear feedback shift register as shown in FIG. 4 will be described below. As shown in FIG. 4, the pseudorandom number generating circuit 501 comprises a shift register 502 and an exclusive-OR gate 503. The shift register 502 is of a structure which is the same as the shift register 410 shown in FIG. 3 though it may have a different number of stages. The shift register 502 has a clock input terminal, a mode switching signal input terminal, and an internal state input terminal connected respectively to the input terminals 405, 406 and 407. Only predetermined bits of an output from the internal state output terminal of the shift register 502 are supplied to the exclusive-OR gate 503, which outputs its output signal to the output terminal 504 and also supplies its output signal to a shift input terminal to the shift register 502. The exclusive-OR gate 503 serves to perform an exclusive-OR operation to the inputted bits and output the result of the exclusive-OR operation. The pseudorandom number generating circuit 501 shown in FIG. 4 is a so-called M-sequence (maximum-length linearly recurring sequence) generating circuit. Since the randomness of pseudorandom numbers generated only by the pseudorandom number generating circuit 501 is not so high and its initial state can easily be estimated, the pseudorandom number generating circuit 501 alone is not suitable for generating pseudorandom numbers for the purpose of encrypting information.

The pseudorandom number generating circuit 511 shown in FIG. 5 comprises a shift register 512, an exclusive-OR gate 513, and a nonlinear function circuit 514. The shift register 512 is of a structure which is the same as the shift register 410 shown in FIG. 3 though it may have a different number of stages. The shift register 512 has a clock input terminal, a mode switching signal input terminal, and an internal state input terminal connected respectively to the input terminals 405, 406 and 407. Only predetermined bits of an output from the internal state output terminal of the shift register 512 are supplied to the exclusive-OR gate 513, which supplies its output signal to a shift input terminal to the shift register 512. The exclusive-OR gate 513 serves to perform an exclusive-OR operation to the inputted bits and output the result of the exclusive-OR operation. All or predetermined bits of an output from the internal state output terminal of the shift register 512 are supplied to the nonlinear function circuit 514, and nonlinearly combined thereby. The nonlinear function circuit 514 outputs a nonlinearly combined signal as a pseudorandom number through an output terminal 515.

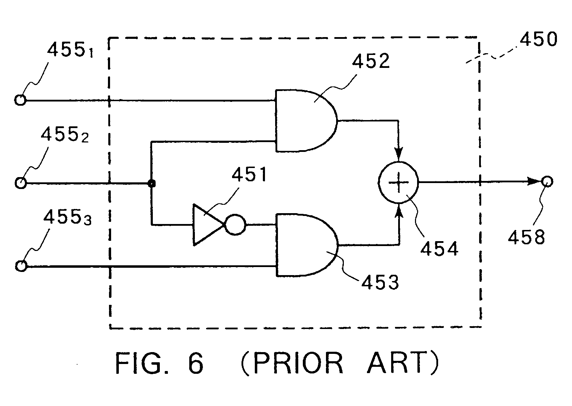

The combining function will be described below. The combining function serves to nonlinearly combine inputted bits and output a nonlinearly combined signal. A combining function circuit which outputs a combining function may be implemented by a logic function circuit, a read-only memory (ROM), or a combination thereof. FIG. 6 is a functional block diagram of a 3-input combining function circuit 450. The combining function circuit 450 can be used as the combining function circuit 402 in the pseudorandom number generator shown in FIG. 1 or FIG. 2 where n = 3, i.e., the number of pseudorandom number generating circuits is 3.

As shown in FIG. 6, the combining function circuit 450 comprises an inverter 451, a first and second 2-input AND gates 452 and 453, a 2-input exclusive-OR gate 454, first, second, and third input terminals $455_1$ to $455_3$ for being supplied with pseudorandom numbers generated by respective different pseudorandom number generating circuits, and an output terminal 458 connected to the output terminal of the exclusive-OR gate 454. The pseudorandom number inputted to the first input terminal $455_1$ is supplied to an input terminal of the first AND gate 452, and the pseudorandom number inputted to the second input terminal $455_2$ is supplied to the other input terminal of the first AND gate 452 and the inverter 451. The second AND gate 453 is supplied with the pseudorandom number inputted to the third input terminal $455_3$ and the pseudorandom number inputted to the second input terminal $455_2$, which has been inverted by the inverter 451. The first and second AND gates 452 and 453 perform AND operations to the inputs thereto and output the result signals of the AND operations to the exclusive-OR gate 454. The exclusive-OR gate 454 performs an exclusive-OR operation to the outputs of the first and second AND gates 452 and 453 and outputs the result signal of the exclusive-OR operation signal through the output terminal 458.

The conventional pseudorandom number generators which have been described above in detail suffer drawbacks in that if they have a reduced circuit scale, then they can generate only pseudorandom numbers which have low nonlinearity, and if they are to generate pseudorandom numbers that are highly nonlinear, they are required to be of an increased circuit scale. Specifically, if the circuit scale of a pseudorandom number generator is to be reduced, then it is effective to use pseudorandom number generating circuits comprising only a linear feedback shift register. In such a circuit arrangement, however, only the combining function circuit carries out a nonlinear conversion, and hence fails to produce pseudorandom numbers which are highly nonlinear. If the number of pseudorandom number generating circuits is reduced to reduce the overall circuit scale, then since the number of inputs to the combining function is also reduced, the nonlinearity of the combining function is reduced, with the result that the pseudorandom number generator will generate pseudorandom numbers with low nonlinearity. Conversely, if the nonlinearity of generated pseudorandom numbers is to be increased, then it is effective to use a combination of a nonlinear function circuit and a linear feedback shift register as a pseudorandom number generating circuit. However, such a circuit arrangement requires nonlinear function circuits to be composed of as many complex logic circuits or read-only memories as the number of pseudorandom number generating circuits used, necessarily resulting in an increased circuit scale. Increasing the number of inputs to the combining function for the purpose of increasing the nonlinearity of pseudorandom numbers has to be accompanied by a corresponding increase in the number of pseudorandom number generating circuits.

It is therefore an object of the present invention to provide a pseudorandom number generator which will eliminate the foregoing shortcomings of the conventional pseudorandom number generators, and is capable of generating a sequence of pseudorandom numbers which are highly nonlinear with a relatively small number of pseudorandom number generating circuits each comprising only a linear feedback shift register, so that the pseudorandom number generator is suitable for use in producing stream ciphers.

According to the present invention, the above object can be achieved by a pseudorandom number generator having a pseudorandom number generating circuit operable in synchronism with a clock signal and a shift register for shifting stored bits one bit at a time in a direction from one end to the other end thereof in synchronism with the clock signal and storing a signal based on at least an output from the pseudorandom number generating circuit at the one end, wherein the pseudorandom number generator includes a nonlinear function circuit for nonlinearly combining predetermined bits of the stored bits of the shift register and outputting a nonlinearly combined signal, and the nonlinear function circuit outputs a pseudorandom number in synchronism with the clock signal.

In the conventional pseudorandom number generator shown in FIG. 2, an output sequence from the combining function circuit 402 is held by the shift register 410, and all or predetermined bits of the internal state of the shift register 410 are linearly combined by the exclusive-OR gate 411 thereby generating a pseudorandom number. With this arrangement, since a conditional probability distribution of pseudorandom numbers which is conditioned by an output from a certain pseudorandom number generating circuit $401_j$ $(1 \leq j \leq n)$ is made substantially uniform, a correlation attack is difficult to carry out. Such a scheme has been used over a long period of time also for the purpose of uniformizing a distribution of random numbers, e.g., random numbers determined by casting dice, which are generated by a physical method. Consequently, a linear combination has been considered to be effective to prevent a correlation attack.

However, a conditional probability is uniformized by a linear combination not based on the linearity of the linear combination, but based on the uniformity of the linear combination. The term "uniformity" means that "0"s and "1"s are produced with substantially the same probability by combining randomly given bits. Therefore, it should be able to prevent a correlation attack with a nonlinear combination, rather than a linear combination, insofar as the nonlinear combination is uniform.

According to the present invention, a nonlinear function circuit for nonlinearly combining predetermined bits of the stored bits of a shift register is used in place of the exclusive-OR gate in the conventional pseudorandom number generator shown in FIG. 2, and the predetermined bits of an internal stage of the shift register, which is supplied with an output from a combining function circuit, are nonlinearly combined by the nonlinear function circuit. Then, a nonlinearly combined signal from the nonlinear function circuit is outputted as a pseudorandom number. This arrangement allows the pseudorandom number generator to generate highly nonlinear pseudorandom numbers while maintaining its ability to prevent a correlation attack. According to the present invention, furthermore, an exclusive-OR gate may be inserted between the combining function circuit and the shift register for supplying the shift register with a signal that is produced by exclusive-OR operation between outputs from the nonlinear function circuit and the combining function circuit. In this manner, the output from the nonlinear function circuit is fed back to the shift register. Even if the nonlinearity of a nonlinear combination performed by the nonlinear function circuit is low, a repetition of conversions with a low nonlinearity is reduced to a conversion with a high nonlinearity as indicated by an example of the square of x becoming $x^2$, the square of $x^2$ becoming $x^4$, and the square of $x^4$ becoming $x^8$. It is thus possible for the pseudorandom number generator to generate pseudorandom numbers of higher nonlinearity.

The above and other objects, features, and advantages of the present invention will become apparent from the following description with reference to the accompanying drawings which illustrate examples of the present invention.

## BRIEF DESCRIPTION OF THE DRAWINGS

FIG. 1 is a functional block diagram of an example of conventional pseudorandom number generator;

FIG. 2 is a functional block diagram of an example of a conventional pseudorandom number generator which is designed to protect itself from a correlation attack;

FIG. 3 is a block diagram of a shift register in the conventional pseudorandom number generator shown in FIG. 2;

FIG. 4 is a functional block diagram of a pseudorandom number generating circuit comprising a linear feedback shift register;

FIG. 5 is a functional block diagram of a pseudorandom number generating circuit comprising a nonlinear function circuit and a linear feedback shift register;

FIG. 6 is a block diagram of a 3-input combining function circuit;

FIG. 7 is a functional block diagram of a pseudorandom number generator according to a first embodiment of the present invention;

FIG. 8 is a block diagram of an example of a nonlinear function circuit;

FIG. 9 is a block diagram of another example of a nonlinear function circuit;

FIG. 10 is a functional block diagram of a pseudorandom number generator according to a second embodiment of the present invention; and

FIG. 11 is a functional block diagram of a pseudorandom number generator according to a third embodiment of the present invention.

## DETAILED DESCRIPTION OF THE PREFERRED EMBODIMENTS

First Embodiment:

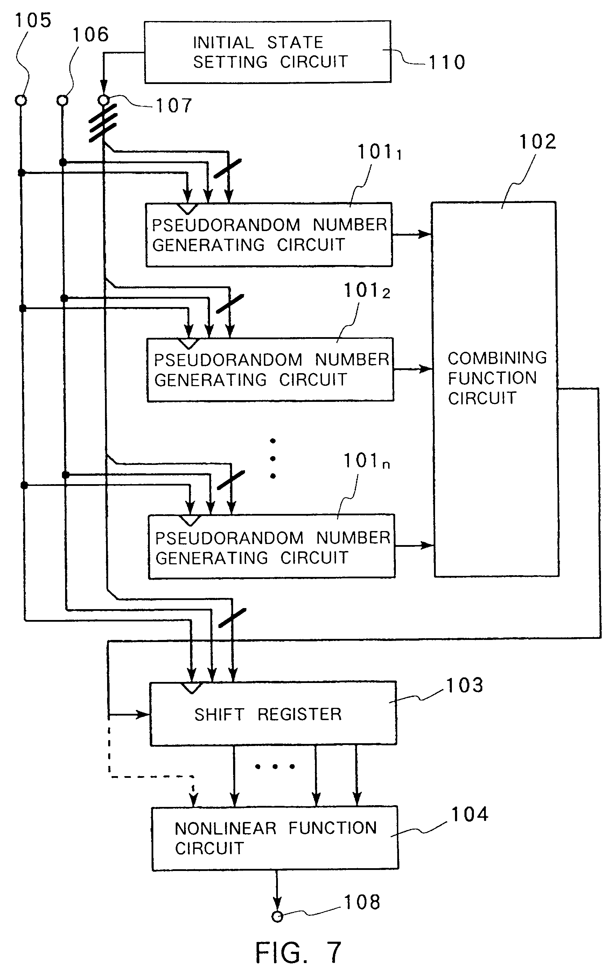

As shown in FIG. 7, a pseudorandom number generator according to a first embodiment of the present invention comprises n pseudorandom number generating circuits $101_1$ to $101_n$ where n is an integer of 2 or higher, a combining function circuit 102 for nonlinearly combining outputs from the n pseudorandom number generating circuits $101_1$ to $101_n$ and outputting a nonlinearly combined signal, a shift register 103 which receives the output from the combining function circuit 102 as a shift input thereto, a nonlinear function circuit 104 for calculating a nonlinear combination of predetermined bits of an internal state of the shift register 103 or all stored bits of the shift register 103, an input terminal 105 for being supplied with a control pulse (a clock pulse), an input terminal 106 for mode control, and an input terminal 107 for inputting a bit sequence called an initial state. In the pseudorandom number generator, the result calculated by the nonlinear function circuit 104 is outputted as a bit stream representing a pseudorandom number from an output terminal 108 in synchronism with a clock signal supplied to the input terminal 105. As indicated by the dotted line in FIG. 7, the output from the combining function circuit 102 may also be applied to nonlinear function circuit 104.

Each of the pseudorandom number generating circuits $101_1$ to $101_n$ is connected to the input terminals 105, 106 and 107. If a control pulse is inputted to the input terminal 105 while a signal "0" is being supplied to the input terminal 106, then each of the pseudorandom number generating circuits $101_1$ to $101_n$ reads an initial state supplied from the input terminal 107 and holds it as an internal state. Each time a control pulse is inputted to the input terminal 105 while a signal "1" is being supplied to the input terminal 106, then each of the pseudorandom number generating circuits $101_1$ to $101_n$ outputs a pseudorandom number. Each of the pseudorandom number generating circuits $101_1$ to $101_n$ may preferably be a pseudorandom number generating circuit comprising only a linear feedback shift register as shown in FIG. 4. The shift register 103 is also connected to the input terminals 105, 106 and 107. If a control pulse is inputted to the input terminal 105 while a signal "0" is being supplied to the input terminal 106, then the shift register 103 holds a bit sequence called an initial state supplied from the input terminal 107 as an internal state. Each time a control pulse is inputted to the input terminal 105 while a signal "1" is being supplied to the input terminal 106, then the shift register 103 shifts the internal state one bit to the right and holds an output from the combining function circuit 102 at an left end bit therein. The shift register 103 may be of the structure shown in FIG. 3.

The pseudorandom number generating circuits $101_1$ to $101_n$, the combining function circuit 102, and the input terminals 105, 106 and 107 of the present embodiment correspond respectively to the pseudorandom number generating circuits $401_1$ to $401_n$, the combining function circuit 402, and the input terminals 405, 406 and 407 provided in the conventional pseudorandom number generator shown in FIGS. 1 and 2. The shift register 103 corresponds to the shift register 410 shown in FIG. 2.

The combining function circuit 102 and the nonlinear function circuit 104 are called differently according to the terminology in the art. However, they are similar to each other in that they perform a nonlinear combining of inputs applied thereto, though they sometimes differ from each other with respect to the number of inputs applied thereto and the internal structure.

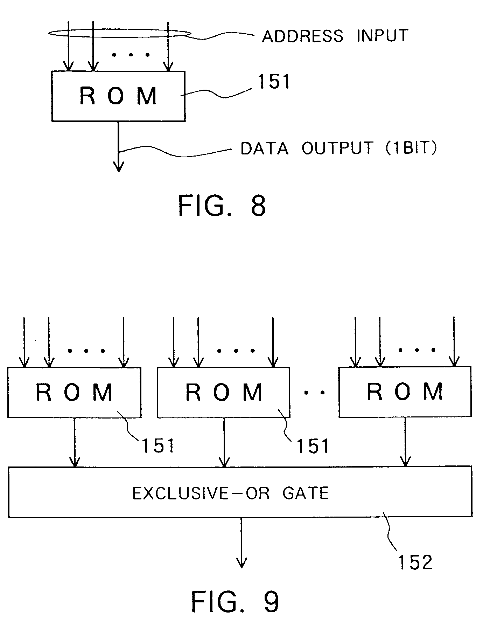

The nonlinear function circuit 104 may comprise any of various optional circuits insofar as they perform a uniform nonlinear combining of inputs applied thereto. For example, the nonlinear function circuit 104 may comprise a look-up table stored in a read-only memory (ROM). Specifically, as shown in FIG. 8, equal numbers of "0"s and "1"s are written in a ROM 151, and a plurality of inputs to the nonlinear function circuit 104 are regarded as inputs to a plurality of address input terminals of the ROM 151 for outputting 1-bit data from the ROM 151 as an output from the nonlinear function circuit 104.

If the number of inputs to the nonlinear function circuit 104, i.e., the number of inputs to ROM 151, increases beyond the number of address input terminals of the ROM 151, then the nonlinear function circuit 104 cannot be implemented by a single ROM. In such a case, as shown in FIG. 9, the nonlinear function circuit 104 may comprise a plurality of ROMs 151 described above and an exclusive-OR gate 152. Outputs from the ROMs 151 may be inputted to the exclusive-OR gate 152, and an output from the exclusive-OR gate 152 may be regarded as an output from the nonlinear function circuit 104.

In general, the pseudorandom number generating circuits $101_1$ to $101_n$ and the shift register 103 are supplied with different initial states through the input terminal 107. Since each of the initial states supplied to the pseudorandom number generating circuits $101_1$ to $101_n$ and the shift register 103 is represented by a plurality of bits depending on its internal bit width, the bit width of the input terminal 107 may be made equal to a total of the internal bit widths of the pseudorandom number generating circuits $101_1$ to $101_n$ and the shift register 103. Alternatively, the pseudorandom number generating circuits $101_1$ to $101_n$ and the shift register 103 may be controlled independently to set them to respective internal states. In the illustrated embodiment, an initial state setting circuit 110 is connected to the input terminal 107 to generate initial states for the pseudorandom number generating circuits $101_1$ to $101_n$ and the shift register 103 for thereby establishing bit sequences of initial states in the pseudorandom number generating circuits $101_1$ to $101_n$ and the shift register 103.

For generating a pseudorandom number with the pseudorandom number generator according to the present invention, initial states for the pseudorandom number generating circuits $101_1$ to $101_n$ and the shift register 103 are supplied from the initial state setting circuit 110 to the input terminal 107. Then, a signal "0" is supplied to the input terminal 106, and a control pulse is inputted to the input terminal 105. As a result, the initial states are established respectively in the pseudorandom number generating circuits $101_1$ to $101_n$ and the shift register 103. Thereafter, a signal "1" is supplied to the input terminal 106. Subsequently, each time a control pulse is inputted to the input terminal 105, one bit of a pseudorandom number is produced from the output terminal 108.

The pseudorandom number generator according to the present invention employs a nonlinear function circuit for performing a uniform nonlinear combination, rather than a linear combining circuit, in order to uniformize a conditional probability distribution of pseudorandom numbers which is conditioned by an output from a certain pseudorandom number generating circuit. Therefore, pseudorandom numbers generated by the pseudorandom number generator are highly nonlinear, and hence are highly resistant to a correlation attack and suitable for use in producing stream ciphers. Even if each of the pseudorandom number generating circuits comprises a simple linear feedback shift register, the pseudorandom number generator can generate highly nonlinear pseudorandom numbers. Consequently, the pseudorandom number generator according to the present embodiment can generate highly nonlinear pseudorandom numbers with a circuit arrangement of a relatively small scale at a low cost.

Second Embodiment:

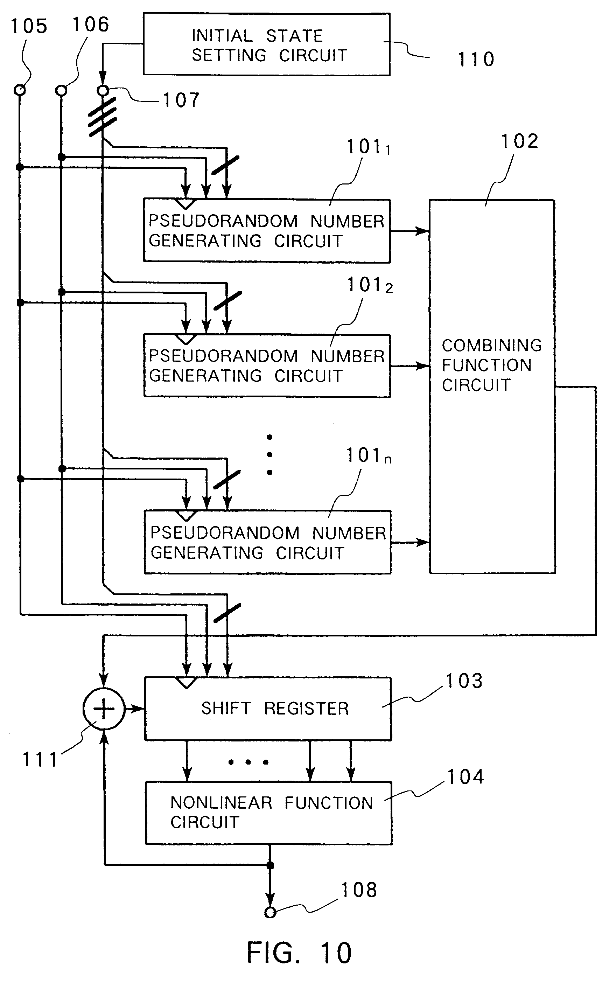

FIG. 10 shows a pseudorandom number generator according to a second embodiment of the present invention. As shown in FIG. 10, the pseudorandom number generator according to the second embodiment differs from the pseudorandom number generator according to the first embodiment in that an exclusive-OR gate 111 is inserted between the combining function circuit 102 and the shift register 103 to supply an output from the exclusive-OR gate 111, rather than an output from the combining function circuit 102, to the shift input terminal of the shift register 103. The exclusive-OR gate 111 performs an exclusive-OR operation between outputs from the combining function circuit 102 and the nonlinear function circuit 104, and outputs the result of the exclusive-OR operation. In the pseudorandom number generator according to the second embodiment, because the output from the nonlinear function circuit 104 is fed back to the shift register 103 through the exclusive-OR gate 111, a highly nonlinear pseudorandom number can be produced from the output terminal 108 even if the nonlinearity of the nonlinear function circuit 104 is low. Therefore, the nonlinear function circuit 104 may be of a reduced circuit scale. The pseudorandom number generator according to the second embodiment produces a pseudorandom number in the same manner as the pseudorandom number generator according to the first embodiment.

Third Embodiment:

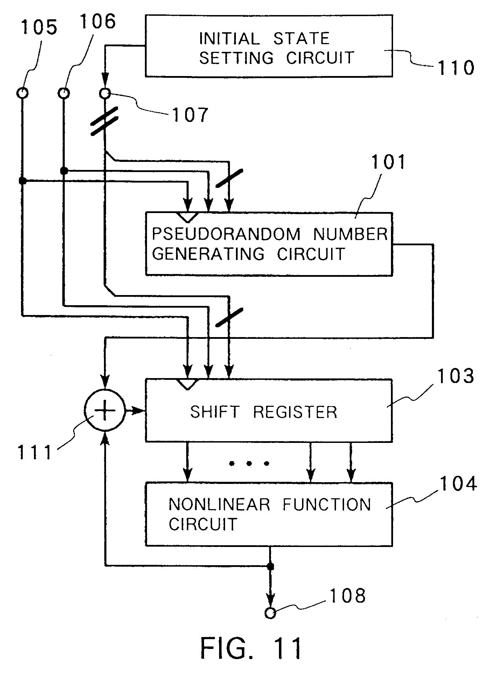

In each of the first and second embodiments, the nonlinearity of the pseudorandom number generator is increased by the nonlinear function circuit 104 connected to the output terminal 108. Particularly, in the second embodiment in which the output from the nonlinear function circuit 104 is fed back to the shift register 103, the pseudorandom number generator may be able to generate pseudorandom numbers which are sufficiently highly nonlinear even if it has one pseudorandom number generating circuit. According to a third embodiment shown in FIG. 11, a pseudorandom number generator has a single pseudorandom number generating circuit 101. Since only one pseudorandom number generating circuit 101 is used, no combining function circuit is required, and an output from the pseudorandom number generating circuit 101 is inputted directly to the exclusive-OR gate 111. Other structural details and operation of the pseudorandom number generator according to the third embodiment are identical to those of the pseudorandom number generator according to the second embodiment.

It is to be understood that although the characteristics and advantages of the present invention have been set forth in the foregoing description, the disclosure is illustrative only, and changes may be made in the arrangement of the parts within the scope of the appended claims.

**Claims**

1. A pseudorandom number generator having a pseudorandom number generating circuit operable in synchronism with a clock signal and a shift register for shifting stored bits one bit at a time in a direction from one end to the other end thereof in synchronism with the clock signal and storing a signal based on at least an output from the pseudorandom number generating circuit at said one end, wherein

   the pseudorandom number generator includes a nonlinear function circuit for nonlinearly combining predetermined bits of the stored bits of the shift register and outputting a nonlinearly combined signal; and

   said nonlinear function circuit outputs a pseudorandom number in synchronism with the clock signal.

2. A pseudorandom number generator according to claim 1, wherein said pseudorandom number generating circuit is a linear feedback shift register.

3. A pseudorandom number generator according to claim 1 or 2, wherein said nonlinear function circuit comprises a read-only memory storing a look-up table containing equal numbers of "0"s and "1"s written in said read-only memory, and said predetermined bits of the stored bits of the shift register are given as an address to said read-only memory.

4. A pseudorandom number generator comprising:

a plurality of pseudorandom number generating circuits which operates synchronously with each other in response to a clock signal;
a combining function circuit for combining outputs from said pseudorandom number generating circuits according to a nonlinear function and outputting a first combined signal;
a shift register for shifting stored bits one bit at a time in a direction from one end to the other end thereof in synchronism with the clock signal and storing an output from said combining function circuit at said one end; and
a nonlinear function circuit for nonlinearly combining predetermined bits of the stored bits of the shift register and outputting a second combined signal; wherein

said nonlinear function circuit outputs a pseudorandom number in synchronism with the clock signal.

5. A pseudorandom number generator comprising:

a plurality of pseudorandom number generating circuits which operate synchronously with each other in response to a clock signal;
a combining function circuit for combining outputs from said pseudorandom number generating circuits according to a nonlinear function and outputting a first combined signal;
a shift register for storing bits;
a nonlinear function circuit for nonlinearly combining predetermined bits of the stored bits of the shift register and outputting a second combined signal; and
an exclusive-OR gate for performing an exclusive-OR operation between the first combined signal and the second combined signal, and outputting a result signal of the exclusive-OR operation; wherein

said shift register shifts the stored bits one bit at a time in a direction from one end to the other end thereof in synchronism with the clock signal and stores an output from said exclusive-OR gate at said one end; and
said nonlinear function circuit outputs a pseudorandom number in synchronism with the clock signal.

6. A pseudorandom number generator according to claim 4 or 5, wherein said nonlinear function circuit comprises means for nonlinearly combining said predetermined bits uniformly.

7. A pseudorandom number generator according to any of claims 4 to 6, wherein the first combined signal is inputted to said nonlinear function circuit, and said nonlinear function circuit nonlinearly combines predetermined bits of the stored bits of the shift register and the first combined signal, and outputs the second combined signal.

8. A pseudorandom number generator according to any of claims 4 to 7, wherein said nonlinear function circuit comprises a read-only memory storing a look-up table containing equal numbers of "0"s and "1"s written in said read-only memory, and said predetermined bits of the stored bits of the shift register are given as an address to said read-only memory.

9. A pseudorandom number generator according to any of claims 4 to 8, wherein each of said pseudorandom number generating circuits is a linear feedback shift register.

10. A pseudorandom number generator according to any of claims 4 to 9, further comprising an initial value setting circuit for establishing initial values in said pseudorandom number generating circuits and said shift register.

11. A pseudorandom number generator comprising:

a single pseudorandom number generating circuit which operates in synchronism with a clock signal;
a shift register for storing bits;
a nonlinear function circuit for nonlinearly combining predetermined bits of the stored bits of the shift register and outputting a nonlinearly combined signal; and
an exclusive-OR gate for performing an exclusive-OR operation between an output of said pseudorandom number generating circuit and the nonlinearly combined signal outputted from said nonlinear function circuit, and outputting a result signal of the exclusive-OR operation; wherein

said shift register shifts the stored bits one bit at a time in a direction from one end to the other end thereof in synchronism with the clock signal and stores an output from said exclusive-OR gate at said one end; and
said nonlinear function circuit outputs a pseudorandom number in synchronism with the clock signal.

**12.** A pseudorandom number generator according to claim 11, wherein said nonlinear function circuit comprises means for nonlinearly combining said predetermined bits uniformly.

**13.** A pseudorandom number generator according to claim 11 or 12, wherein said nonlinear function circuit comprises a read-only memory storing a look-up table containing equal numbers of "0"s and "1"s written in said read-only memory, and said predetermined bits of the stored bits of the shift register are given as an address to said read-only memory.

**14.** A pseudorandom number generator according to any of claims 11 to 13, wherein said pseudorandom number generating circuit is a linear feedback shift register.

**15.** A pseudorandom number generator according to any of claims 11 to 14, further comprising an initial value setting circuit for establishing initial values in said pseudorandom number generating circuit and said shift register.

405    406    407                                    401₁                402

PSEUDORANDOM NUMBER
GENERATING CIRCUIT

401₂

PSEUDORANDOM NUMBER
GENERATING CIRCUIT

COMBINING
FUNCTION
CIRCUIT

401ₙ

PSEUDORANDOM NUMBER
GENERATING CIRCUIT

408

FIG. 1  (PRIOR ART)

405  406  407

401₁

402

PSEUDORANDOM NUMBER
GENERATING CIRCUIT

401₂

PSEUDORANDOM NUMBER
GENERATING CIRCUIT

COMBINING
FUNCTION
CIRCUIT

401ₙ

PSEUDORANDOM NUMBER
GENERATING CIRCUIT

SHIFT REGISTER    410

411

408

FIG. 2   (PRIOR ART)

FIG. 3 (PRIOR ART)

FIG. 4 (PRIOR ART)

405   406   407   511

SHIFT REGISTER

512

513

514

NONLINEAR FUNCTION CIRCUIT

515

FIG. 5   (PRIOR ART)

FIG. 6 (PRIOR ART)

105   106

107

INITIAL STATE
SETTING CIRCUIT ——— 110

$101_1$

PSEUDORANDOM NUMBER
GENERATING CIRCUIT

102

$101_2$

PSEUDORANDOM NUMBER
GENERATING CIRCUIT

COMBINING
FUNCTION
CIRCUIT

$101_n$

PSEUDORANDOM NUMBER
GENERATING CIRCUIT

103

SHIFT REGISTER

• • •

104

NONLINEAR FUNCTION
CIRCUIT

108

FIG. 7

ADDRESS INPUT

R O M ——151

DATA OUTPUT (1BIT)

## FIG. 8

R O M  ·· R O M  R O M

151  151

EXCLUSIVE—OR GATE

152

## FIG. 9

FIG. 10

105  106
○    ○    ○ ~107

| INITIAL STATE SETTING CIRCUIT | ~110 |

| PSEUDORANDOM NUMBER GENERATING CIRCUIT | 101 |

111 ⊕

| SHIFT REGISTER | 103 |

• • •

| NONLINEAR FUNCTION CIRCUIT | 104 |

○ ~108

FIG. 11

European Patent Office

**EUROPEAN SEARCH REPORT**

Application Number

EP 96 12 0661

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 202 051 A (DAVIDA GEORGE I  ET AL) 6 May 1980 | 1-3 | G06F7/58 H04L9/26 |
| Y | * abstract; figures 1,3 * | 4,6-10 | |
| A | | 5,11 | |
| | --- | | |
| Y,D, P | US 5 566 099 A (SHIMADA MICHIO) 15 October 1996 | 4,6-10 | |
| | * figures * | | |
| Y,D | & JP 07 104 976 A (NEC CORP) 21 April 1995 | 4,6-10 | |
| | --- | | |
| Y | IEEE TRANSACTIONS ON INFORMATION THEORY, vol. 36, no. 2, 1 March 1990, pages 386-392, XP000132571 HOLLMANN H:  "DESIGN OF TEST SEQUENCES FOR VLSI SELF-TESTING USING LFSR" * figure 1 * | 1-3 | |
| | --- | | |
| Y | US 4 161 041 A (BUTLER ERIC W ET AL) 10 July 1979 * abstract; figure 3 * | 1-3 | |
| | ----- | | TECHNICAL FIELDS SEARCHED      (Int.Cl.6) H04L G06F |

The present search report has been drawn up for all claims

| Place of search | Date of completion of the search | Examiner |
|---|---|---|
| THE HAGUE | 21 April 1997 | Verhoof, P |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

.......................................................................................
& : member of the same patent family, corresponding
     document

EPO FORM 1503 03.82 (P04C01)